# EUROPEAN PATENT APPLICATION

(11) **EP 2 683 111 A1**
(43) Date of publication of application: **08.01.2014**
(21) Application number: 12761147.3
(22) Date of filing: 03.02.2012
(51) Int. Cl.: H04L 7/00, H04L 1/00

(54) **METHOD AND DEVICE FOR ADJUSTING LINE SEQUENCES IN ETHERNET TRANSMISSION**

(30) Priority: 18.03.2011 CN 201110066475
(71) Applicant: ZTE Corporation, Shenzhen, Guangdong 518057 (CN)
(72) Inventor: YUAN, Chun, Shenzhen Guangdong 518057 (CN); MIAO, Zhonglin, Shenzhen Guangdong 518057 (CN); WANG, Xiaoming, Shenzhen Guangdong 518057 (CN); LIU, Hengqi, Shenzhen Guangdong 518057 (CN)
(74) Representative: Ahner, Philippe
(86) International application number: PCT/CN2012/070859
(87) International publication number: WO 2012/126289

(57) **Abstract**

The disclosure discloses a reordering device and method for Ethernet transmission configured to solve a technical problem of large resource consumption and an the operating frequency failing to meet the requirement of a high-speed system in an existing reordering method. The reordering device provided by the disclosure includes a line sequence detecting module and a line sequence locking module, wherein the line sequence detecting module is configured to detect a line sequence corresponding to each channel, acquire a serial number of the channel and encode the serial number, and send the coded serial number to the line sequence locking module; and the line sequence locking module reorders input data according to the coded serial number received to obtain a reordered data stream, then sends out the reordered data stream, and at the same time, locks a sequence of the reordered data stream. By reordering and locking, the device and method provided by the disclosure can properly recover the sequence of data as soon as possible, thereby enhancing the operating frequency and lowering occupied resources.

## Description

### TECHNICAL FIELD

The disclosure relates to the field of communication technology, and in particular to a reordering device and method for Ethernet transmission.

### BACKGROUND

In ordinary data transmission, the transmission is performed in a descending or ascending order when sending data, a receiving side also receives the data in a corresponding order. However, sometimes the receiving side is also required to convert input data into another displaying format according to a certain rule, which involves the problem of data sequence adjustment.

In logic design, a wide data bit width will inevitably affect operating frequency. The wider the bit width, the lower the operating frequency is. There is a tradeoff between the bit width and the operating frequency. However, in a high-speed system, a module with low operating frequency will inevitably affect other modules in the same clock domain. This requires the bit width to be lowered as much as possible while guaranteeing a function, so as to achieve high operating frequency.

In 100G Ethernet transmission, a data transmission sequence divided according to virtual channels is often disordered, which requires the receiving side to be able to recover the sequence properly. The Ethernet provides a method for recovering data.

There is a reordering (adjusting line sequences) function in a Physical Coding Sublayer (PCS) module of the 100G Ethernet, in which the PCS module further includes a word aligning module and a delay eliminating module. The bit width reaching a reordering module is generally 1320bit; plus some control signals, a possible bit width may reach 1400bit. For 20 channels, the output of each channel is a set of data selected from the 1400bit data. Therefore, each channel is a big selector, and there are 20 cases for each selector. This means that there are 20 multi-route selectors altogether, with an input bit width of 1400bit and an output bit width of 70bit for each selector. With a design under such bit widths, the operating frequency may reach 100mhz at most, which is nowhere near the requirement on the operating frequency (of, for example, 200-300m) of some current high-speed systems.

A reordering method provided by the related art improves the operating frequency through a pipelining method by refining each module, namely, breaking data into multi-stage pipeline beats. Such a method can increase the frequency roughly to 200mhz, which sometimes still cannot meet the frequency requirement for some current 100G Ethernet solutions; moreover, as multi-stage pipelining of the data sacrifices resources for the frequency, it requires to consume a lot of resources.

### SUMMARY

A main objective of the disclosure is to provide a reordering method for Ethernet transmission that takes up fewer resources with a high operating frequency.

The technical solution adopted by the disclosure for solving its technical problem is as follows.

A reordering device for Ethernet transmission, includes a line sequence detecting module and a line sequence locking module, wherein
the line sequence detecting module is configured to detect a line sequence corresponding to each channel, acquire a serial number of the channel and encode the serial number, and send the coded serial number to the line sequence locking module; and
the line sequence locking module is configured to reorder input data according to the coded serial number received to obtain a reordered data stream, then send out the reordered data stream, and at the same time, lock a sequence of the reordered data stream.

Preferably, the reordering device for Ethernet transmission may further include a line sequence verifying module configured to verify the coded serial number, and send the coded serial number properly verified to the line sequence locking module.

Preferably, the reordering device for Ethernet transmission may further include a line sequence monitoring module connected to the line sequence locking module and configured to monitor the sequence of the data stream of the line sequence locking module.

Preferably, the reordering device for Ethernet transmission may further include a word aligning module and a delay eliminating module, wherein
the line sequence locking module is configured to send the reordered data stream to the word aligning module;
the word aligning module is configured to perform word alignment on the reordered data stream to recover and lock a proper word, and send the recovered and locked word to the delay eliminating module ; and
the delay eliminating module is configured to identify the serial number of each channel according to the recovered and locked word, and perform recoding for each channel, then send the recoded code to the line sequence locking module.

Preferably, the line sequence locking module may be configured to receive the recoded code sent by the delay eliminating module, reorder the input data according to the recoded code and lock the reordered sequence, and resend the recoded and reordered data stream to the word aligning module; and
the line sequence monitoring module may be configured to monitor the sequence of the recoded and reordered data stream of the line sequence locking module.

A reordering method for Ethernet transmission includes:
detecting a line sequence corresponding to each channel, acquiring a serial number of the channel and encoding the serial number; and
reordering input data according to the coded serial number received to obtain a reordered data stream, then sending the reordered data stream, and at the same time, locking a sequence of the reordered data stream.

Preferably, the method may further include: after acquiring a serial number of the channel and encoding the serial number,
verifying the coded serial number.

Preferably, the method may further include: after locking a sequence of the reordered data stream,
monitoring the sequence of the data stream of the line sequence locking module.

Preferably, the method may further include: after monitoring the sequence of the data stream of the line sequence locking module,
performing word alignment on the reordered data stream to recover and lock a proper word; and
identify the serial number of each channel according to the recovered and locked word, and recoding for each channel.

Preferably, the method may further include: after recoding for each channel,
reordering the input data according to the recoded code and locking the reordered sequence, and resending the recoded and reordered data stream to the word aligning module; and
monitoring the sequence of the recoded and reordered data stream.

Implementation of the technical solution of the disclosure has the following beneficial effect: by reordering and locking, the device and method provided by the disclosure can properly recover the sequence of data as soon as possible, thereby enhancing the operating frequency and reducing occupied resources.

### BRIEF DESCRIPTION OF THE DRAWINGS

Fig. 1 is a diagram of a structure of a device provided by an embodiment of the disclosure;
Fig. 2 is a diagram of another structure of a device provided by an embodiment of the disclosure;
Fig. 3 is a diagram of yet another structure of a device provided by an embodiment of the disclosure;
Fig. 4 is a diagram of yet another structure of a device provided by an embodiment of the disclosure;
Fig. 5 is a flowchart of a method provided by an embodiment of the disclosure;
Fig. 6 is another flowchart of a method provided by an embodiment of the disclosure;
Fig. 7 is yet another flowchart of a method provided by an embodiment of the disclosure;
Fig. 8 is yet another flowchart of a method provided by an embodiment of the disclosure; and
Fig. 9 is yet another flowchart of a method provided by an embodiment of the disclosure.

### DETAILED DESCRIPTION

In order to clarify an objective, the technical solution, and an advantage of the disclosure, the disclosure is further elaborated below with reference to the drawings and embodiments. Note that a specific embodiment described here is merely for explicating the disclosure, and is not intended to limit the disclosure.

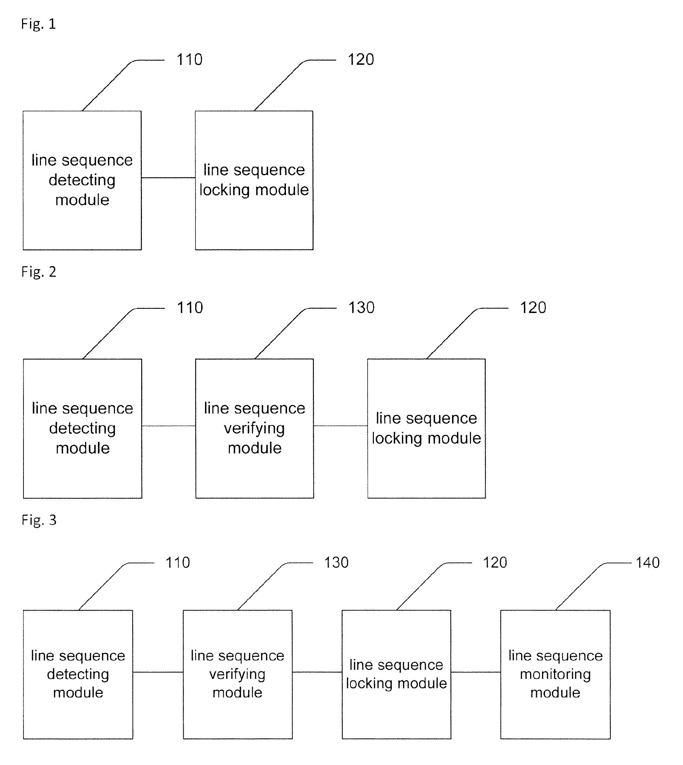

An embodiment of the disclosure provides a reordering device for Ethernet transmission. As shown in Fig. 1, the device includes a line sequence detecting module 110 and a line sequence locking module 120, wherein

The line sequence detecting module 110 is configured to detect a line sequence corresponding to each channel, acquire a serial number of the channel and encode the serial number, and send the coded serial number to the line sequence locking module; the encoding may be performed in various encoding ways, and one-hot encoding is adopted in this embodiment. The coded serial number is fed back to the line sequence locking module 120.

The line sequence locking module 120 is configured to reorder input data according to the coded serial number received to obtain a reordered data stream, then send out the reordered data stream, and at the same time, lock a sequence of the reordered data stream. When receiving a proper sequence of the coded serial number, the line sequence locking module reorders input data according to the sequence, then sends the reordered data out, and locks the sequence at the same time; if a sequence currently fed back is improper, then the line sequence locking module discards the improper sequence and sends the data according to an original sequence until a proper sequence is received.
by reordering and locking, the device can properly recover the sequence of data as soon as possible, thereby enhancing the operating frequency and lowering occupied resources.

In other embodiments, based on the aforementioned embodiment, further, as shown in Fig. 2, the reordering device for Ethernet transmission further includes: a line sequence verifying module 130 configured to verify the coded serial number, and send the coded serial number properly verified to the line sequence locking module. Thus, the properness of the coded serial number is guaranteed, such that the following line sequence locking module 120 can receive the proper coded serial number with the best chance, again reducing resources occupation.

The line sequence verifying module 130 is arranged between the line sequence detecting module 110 and the line sequence locking module 120, and after receiving the coding fed back by the line sequence detecting module 110, the line sequence verifying module verifies the properness and completeness of the coded serial number, and the like to ensure the existence of a coding for each serial number that should have a coding. If the serial number is coded in a proper coding sequence, then the line sequence verifying module sends the serial number to the line sequence locking module, otherwise continues to wait, until obtaining the proper coding sequence of the serial number.

In other embodiments, based on the aforementioned embodiment, further, as shown in Fig. 3, the reordering device for Ethernet transmission further includes: a line sequence monitoring module 140 connected to the line sequence locking module 120; the line sequence monitoring module 140 is configured to monitor the sequence of the data stream of the line sequence locking module 120. The sequence of data is monitored in real time after a circuit starts to operate normally, and the process of reordering and locking is restarted once a data sequence change or a link error is found. Monitoring is performed once again after the circuit enters a mode of normal operation.

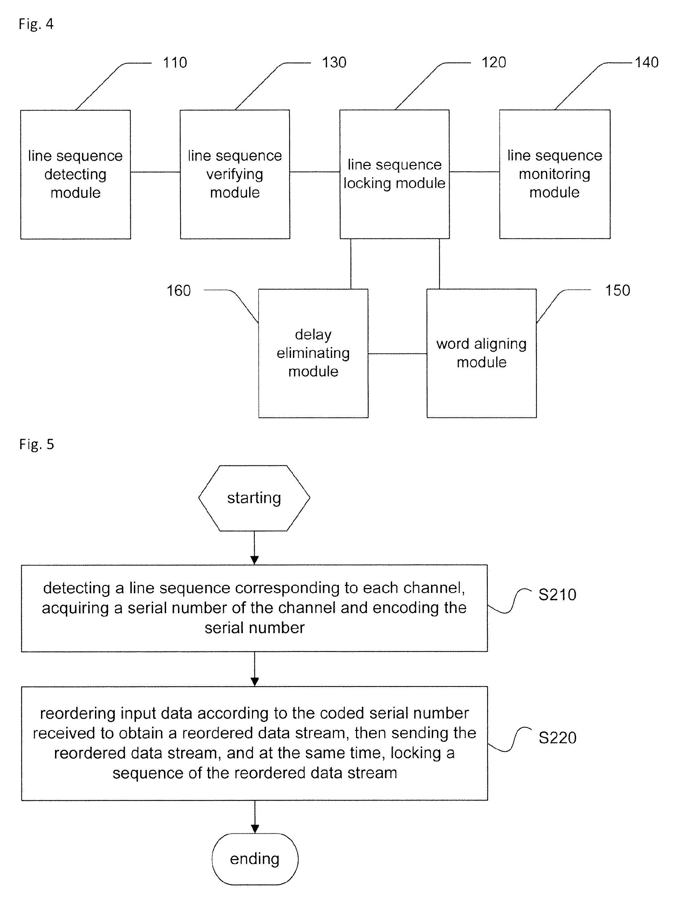

In other embodiments, based on the aforementioned embodiments, further, the reordering device for Ethernet transmission further includes: a word aligning module 150 and a delay eliminating module 160, as shown in Fig. 4, wherein
the line sequence locking module 120 is configured to send the reordered data stream to the word aligning module 150;
the word aligning module 150 is configured to perform word alignment on the reordered data stream to recover and lock the proper word, and send the recovered and locked word to the delay eliminating module 160; each channel corresponds to a set of data stream, for example: for the 100G Ethernet, the number of channels is 20; for 40G Ethernet, the number of channels is 4; and
the delay eliminating module 160 is configured to identify the serial number of each channel according to the recovered and locked word, and perform recoding for each channel, then send the recoded code to the line sequence locking module 120 to perform the process of locking and reordering again.

In other embodiments, based on the aforementioned embodiment, further, the line sequence locking module 120 is configured to receive the recoded code sent by the delay eliminating module 160, reorder the input data according to the recoded code and lock the reordered sequence, and resend the recoded and reordered data stream to the word aligning module 150; after receiving the adjusted data, the word aligning module 150 performs word alignment for lock loss to perform once again word alignment and lock;

The line sequence monitoring module 140 monitors the sequence of the recoded and reordered data stream of the line sequence locking module 120, and restarts the course of reordering once locking is lost, such that a cycle of the process of locking and reordering is performed. By adopting a mechanism of detecting once and locking twice, the aforementioned device takes up fewer resources, and can better improve the operating frequency.

An embodiment of the disclosure further provides a reordering method for Ethernet transmission, as shown in Fig. 5, the method includes the steps of:
Step S210: detecting a line sequence corresponding to each channel, acquiring a serial number of the channel and encoding the serial number;
Step S220: reordering input data according to the coded serial number received to obtain a reordered data stream, then sending the reordered data stream, and at the same time, locking a sequence of the reordered data stream.

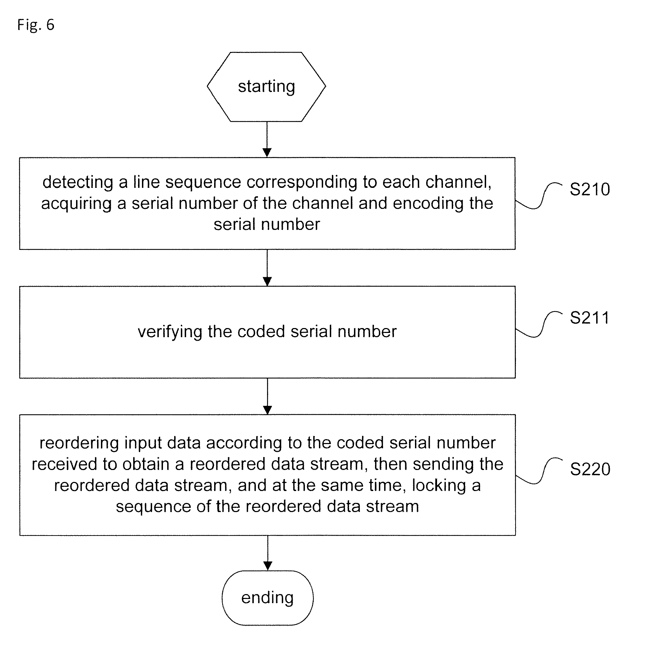

In other embodiments, based on the aforementioned embodiment, as shown in Fig. 6, a step S211 of verifying the coded serial number is further included after step S210 of acquiring a serial number of the channel and encoding the serial number.

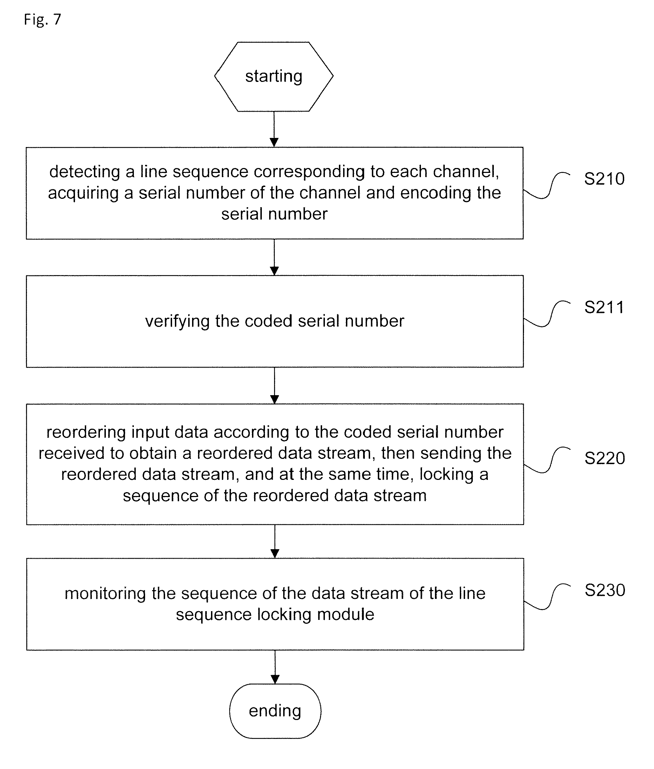

In other embodiments, based on the aforementioned embodiment, as shown in Fig. 7, a step S230 of monitoring the sequence of the data stream of the line sequence locking module is further included after step S220 of locking a sequence of the reordered data stream.

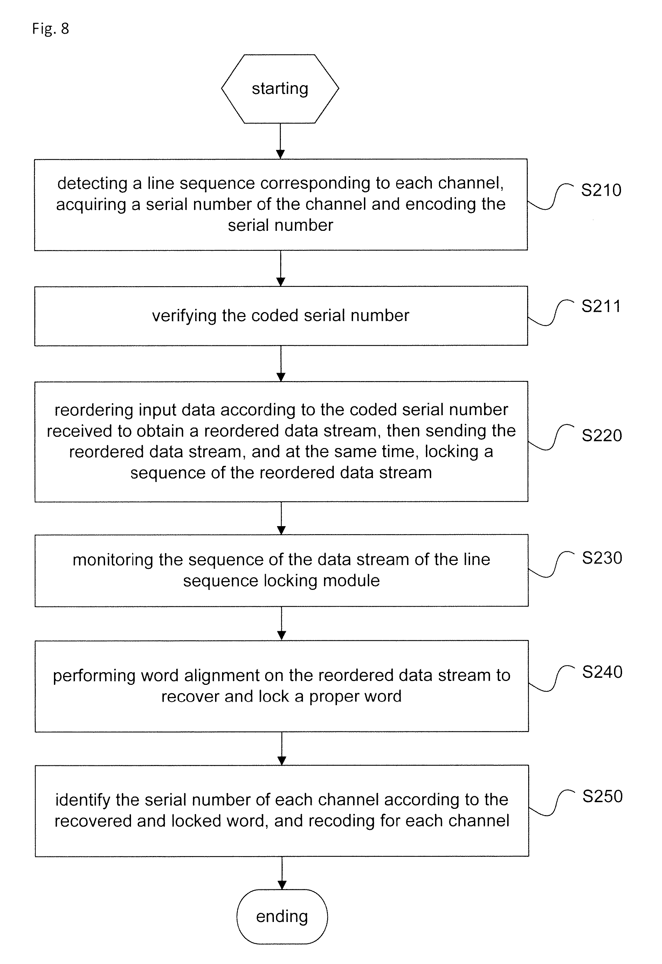

In other embodiments, based on the aforementioned embodiment, as shown in Fig. 8, after step S230 of monitoring the sequence of the data stream of the line sequence locking module, the method further includes the steps of:
Step S240: performing word alignment on the reordered data stream to recover and lock a proper word; and
Step S250: identifying the serial number of each channel according to the recovered and locked word, and recoding for each channel.

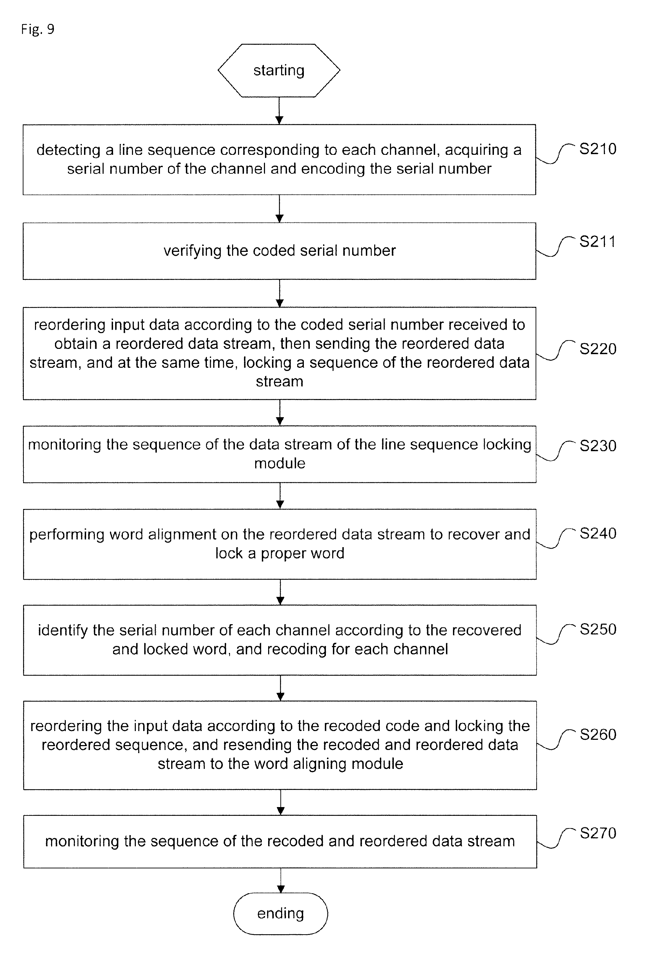

In other embodiments, based on the aforementioned embodiment, as shown in Fig. 9, after step S250 of recoding for each channel, the method further includes the steps of:
Step S260: reordering the input data according to the recoded code and locking the reordered sequence, and resending the recoded and reordered data stream to the word aligning module; and
Step S270: monitoring the sequence of the recoded and reordered data stream. By adopting the mechanism of detecting once and locking twice, fewer resources are taken up, allowing better improvement of the operating frequency.

By reordering and locking, the aforementioned method can properly recover the sequence of data as soon as possible, thereby enhancing the operating frequency and reducing occupied resources.

What described are merely preferred embodiments of the disclosure, and are not intended to limit the disclosure, and any modification, equivalent replacement, and improvement within the spirit and principle of the disclosure shall be included in the scope of the disclosure.

### INDUSTRIAL APPLICABILITY

By reordering and locking, the device and method provided by the disclosure can properly recover the sequence of data as soon as possible, thereby enhancing the operating frequency and reducing occupied resources.

## Claims

1. A reordering device for Ethernet transmission, comprising a line sequence detecting module and a line sequence locking module, wherein
the line sequence detecting module is configured to detect a line sequence corresponding to each channel, acquire a serial number of the channel and encode the serial number, and send the coded serial number to the line sequence locking module; and
the line sequence locking module is configured to reorder input data according to the coded serial number received to obtain a reordered data stream, then send out the reordered data stream, and at the same time, lock a sequence of the reordered data stream.

2. The reordering device for Ethernet transmission according to claim 1, further comprising a line sequence verifying module configured to verify the coded serial number, and send the coded serial number properly verified to the line sequence locking module.

3. The reordering device for Ethernet transmission according to claim 2, further comprising a line sequence monitoring module connected to the line sequence locking module and configured to monitor the sequence of the data stream of the line sequence locking module.

4. The reordering device for Ethernet transmission according to claim 2, further comprising a word aligning module and a delay eliminating module, wherein
the line sequence locking module is configured to send the reordered data stream to the word aligning module;
the word aligning module is configured to perform word alignment on the reordered data stream to recover and lock a proper word, and send the recovered and locked word to the delay eliminating module ; and
the delay eliminating module is configured to identify the serial number of each channel according to the recovered and locked word, and perform recoding for each channel, then send the recoded code to the line sequence locking module.

5. The reordering device for Ethernet transmission according to claim 4, wherein
the line sequence locking module is further configured to receive the recoded code sent by the delay eliminating module, reorder the input data according to the recoded code and lock the reordered sequence, and resend the recoded and reordered data stream to the word aligning module; and
the line sequence monitoring module is further configured to monitor the sequence of the recoded and reordered data stream of the line sequence locking module.

6. A reordering method for Ethernet transmission, comprising:
detecting a line sequence corresponding to each channel, acquiring a serial number of the channel and encoding the serial number; and
reordering input data according to the coded serial number received to obtain a reordered data stream, then sending the reordered data stream, and at the same time, locking a sequence of the reordered data stream.

7. The method according to claim 6, further comprising: after acquiring a serial number of the channel and encoding the serial number,
verifying the coded serial number.

8. The method according to claim 7, further comprising: after locking a sequence of the reordered data stream,
monitoring the sequence of the data stream of the line sequence locking module.

9. The method according to claim 8, further comprising: after monitoring the sequence of the data stream of the line sequence locking module,
performing word alignment on the reordered data stream to recover and lock a proper word; and
identify the serial number of each channel according to the recovered and locked word, and recoding for each channel.

10. The method according to claim 9, further comprising: after recoding for each channel,
reordering the input data according to the recoded code and locking the reordered sequence, and resending the recoded and reordered data stream to the word aligning module; and
monitoring the sequence of the recoded and reordered data stream.
